# EUROPÄISCHE PATENTSCHRIFT

(11) **EP 4 065 425 B1**
(45) Veröffentlichungstag und Bekanntmachung des Hinweises auf die Patenterteilung: **31.01.2024**
(21) Anmeldenummer: 20815754.5
(22) Anmeldetag: 25.11.2020
(51) Int. Cl.: B60R 22/34, B60R 22/46

(54) **GURTAUFROLLER**
SEAT-BELT RETRACTOR
RÉTRACTEUR DE CEINTURE DE SÉCURITÉ

(30) Priorität: 26.11.2019 DE 102019218307
(43) Veröffentlichungstag der Anmeldung: 05.10.2022
(73) Patentinhaber: Autoliv Development AB, 447 83 Vårgårda (SE)
(72) Erfinder: JABUSCH, Ronald, 25336 Elmshorn (DE)
(74) Vertreter: Müller Verweyen
(86) Internationale Anmeldenummer: PCT/EP2020/083283
(87) Internationale Veröffentlichungsnummer: WO 2021/105159

(56) Entgegenhaltungen:
- EP-A1- 1 498 326
- EP-A2- 1 504 971
- WO-A1-2011/148772
- DE-A1-102018 213 282
- DE-A1-102018 219 040
- US-A1- 2001 045 483
- US-A1- 2004 108 155

## Beschreibung

Die vorliegende Erfindung betrifft einen Gurtaufroller mit den Merkmalen des Oberbegriffs von Anspruch 1.

Gurtaufroller weisen als Grundbauteile einen lasttragenden Rahmen und eine in dem Rahmen drehbar gelagerte Gurtspule auf, auf welcher ein Sicherheitsgurt aufwickelbar ist. Der Rahmen dient neben der Lagerung der Gurtspule außerdem zur Befestigung an einer Sitzstruktur oder an einer Fahrzeugstruktur und ist dafür aus einem entsprechend dicken Stahlblech hergestellt, welches zu einem U-förmigen Rahmen gebogen ist.

Fahrzeugsitze mit Sicherheitsgurteinrichtungen sind z.B. in der Verwendung als Vordersitze in Cabriolets bekannt, bei denen wenigstens die Gurtaufroller der Sicherheitsgurteinrichtungen in den Rückenlehnen der Fahrzeugsitze befestigt sind. Die Gurtaufroller werden in diesem Fall mangels einer lasttragenden B-Säule und aus Gründen des Zuganges zu den hinteren Sitzen bzw. aus Gründen der Entfernung zu der hinteren Fahrzeugstruktur bevorzugt in die Rückenlehnen der Fahrzeugsitze integriert, welche damit auch zur Aufnahme der im Rückhaltefall wirkenden Zugkräfte ausgelegt werden müssen. Die Gurtaufroller selbst weisen alle Grundbauteile eines Standardgurtaufrollers auf und werden nur mit verschiedenen, speziell für den Einbau in die Rückenlehne vorgesehenen Zusatzbaugruppen, wie z.B. einem sich selbst ausrichtenden Trägheitssensor versehen.

Der Fahrzeugsitz weist in seinem Grundaufbau eine Sitzstruktur aus mehreren lasttragenden Strukturteilen auf, welche zur Befestigung des Fahrzeugsitzes an der Fahrzeugstruktur dienen. Die Sitzstruktur ist zur Verbesserung des Sitzkomforts mit Federn und einer Polsterung versehen und dient außerdem zur Befestigung weiterer Bauteile wie z.B. verschiedene Sitzverstellmechanismen, einschließlich der zugehörigen Elektromotoren und weiterer Bauteile wie Heizeinrichtungen, Sensoren, Displays, Kopfstützen und dergleichen.

In modernen Fahrzeugen mit autonomen Fahrsystemen wird zunehmend eine vergrößerte Verstellbarkeit der Fahrzeugsitze in verschiedene Ausrichtungen und Stellungen gefordert, damit der Fahrzeuginsasse die durch das autonome Fahren gewonnenen Freiheiten z.B. zu einer vertieften Kommunikation mit den weiteren Insassen, zu verlängerten und intensiveren Ruhephasen oder auch zur Arbeit nutzen und den Fahrzeugsitz dazu entsprechend ausrichten kann. Dies hat zur Folge, dass die Sicherheitsgurteinrichtung und insbesondere der Gurtaufroller nicht mehr wie bisher an der Fahrzeugstruktur, sondern stattdessen am Fahrzeugsitz befestigt werden muss, wie dies z.B. auch schon bei den Vordersitzen von Cabriolets der Fall war.

Ferner werden Gurtaufroller in modernen Sicherheitsgurteinrichtungen mit Elektromotoren versehen, welche die Gurtwelle bei einer Aktivierung zum Beispiel zu einer reversiblen Gurtstraffung in Aufwickelrichtung antreiben. Der Elektromotor ist dabei ebenfalls an dem Rahmen befestigt und seitlich der Gurtwelle mit einer parallel zu der Drehachse der Gurtwelle ausgerichteten Antriebswelle angeordnet. Ferner ist es bekannt, zwischen der Gurtwelle und dem Elektromotor ein Getriebe vorzusehen, durch welches die Drehzahl des Elektromotors in eine vorbestimmte Drehzahl der Gurtwelle übersetzt wird. Durch die Verwendung des Getriebes wird es außerdem ermöglicht, einen möglichst kleinbauenden Elektromotor mit einer hohen Drehzahl zu verwenden. Insgesamt ergibt sich dadurch trotz der durch das Getriebe ermöglichten Verwendung des kleinbauenden Elektromotors ein Gurtaufroller mit einem vergrößerten Bauraumbedarf. Ein solcher Gurtaufroller ist z.B. aus der Druckschrift WO 03/0 99 619 A2 bekannt.

Sofern die Gurtwelle mit unterschiedlichen Drehzahlen und Drehmomenten angetrieben werden soll, müssen weitere Getriebestufen vorgesehen werden, welche den Bauraumbedarf weiter vergrößern. Ein solcher Gurtaufroller ist z.B. aus der Druckschrift DE 199 27 731 C2 bekannt.

Aus der US 2001/045483 ist ein Gurtaufroller nach dem Oberbegriff des Anspruchs 1 bekannt,

Da die an der Sitzstruktur der Fahrzeugsitze oder auch allgemein in sehr kleinen Fahrzeugen zur Verfügung stehenden Bauräume in ihrer Größe sehr begrenzt sind und aus Designgründen nicht beliebig vergrößert werden können, ist die Anordnung eines derartigen Gurtaufrollers am Fahrzeugsitz oder auch in einem kleinen Fahrzeug grundsätzlich problematisch.

Vor diesem Hintergrund liegt der Erfindung die Aufgabe zugrunde, einen verbesserten Gurtaufroller mit einem Elektromotor und einem Getriebe mit einem reduzierten Bauraumbedarf zu schaffen.

Zur Lösung der Aufgabe wird ein Gurtaufroller mit den Merkmalen von Anspruch 1 vorgeschlagen. Weitere bevorzugte Ausführungsformen der Erfindung sind den Unteransprüchen, den Figuren und der zugehörigen Beschreibung zu entnehmen.

Gemäß dem Grundgedanken der Erfindung wird vorgeschlagen, dass das Getriebe in einem deaktivierten Zustand als Baugruppe zum Antrieb der Gurtwelle mit einem ersten Drehmoment antreibbar ist, und der Gurtaufroller ein erstes Teil aufweist, welches bei einem Überschreiten einer von dem Sicherheitsgurt ausgeübten Zugkraft zu einer Drehbewegung in einer in Bezug zu der Drehrichtung des Elektromotors entgegengesetzten Drehrichtung angetrieben wird, und dass eine Bremseinrichtung vorgesehen ist, welche die Drehbewegung des ersten Teils bremst und dadurch eine Blockiereinrichtung zur Blockierung eines zweiten Teils des Getriebes ansteuert, wobei die Blockiereinrichtung das Getriebe durch die Blockierung des zweiten Teils zur Übertragung der Drehbewegung des Elektromotors in einem Untersetzungsverhältnis aktiviert.

Das Getriebe bildet in dem deaktivierten Zustand als Baugruppe einen ersten Kraftübertragungsweg, in dem die Drehbewegung des Elektromotors 1:1, d.h. ohne jegliche Über- bzw. Untersetzung auf die Gurtwelle übertragen wird. Die Baugruppe bildet einen Block der zwischen dem Elektromotor und der Gurtwelle angeordnet und mit beiden Teilen drehfest verbunden ist. In dem ersten Kraftübertragungsweg, d.h. wenn das Getriebe die Drehbewegung 1:1 überträgt, kann der Sicherheitsgurt nach dem Abschnallen aktiv in die Parkposition zurückgezogen werden (Wickelhilfe). Damit kann die in dem Gurtaufroller bisher verwendete Triebfeder unterstützt werden oder im Extremfall sogar entfallen. Die Drehzahl des Elektromotors beträgt in diesem Fall zwischen 100 und 200 U/min, und der Sicherheitsgurt wird mit einer Zugkraft von ca. 10 bis 50 N eingezogen.

In dem zweiten Kraftübertragungsweg, wenn das Getriebe aktiviert ist, wird die Welle des Elektromotor durch eine entsprechend höhere Bestromung zu einer höheren Drehzahl angetrieben, welche dann wiederum durch das Getriebe in eine niedrigere Drehzahl untersetzt wird, so dass der Sicherheitsgurt z.B. für eine reversible Vorstraffung mit einer höheren Rückzugskraft von ca. 150 bis 800 N und in einer erheblich kürzeren Zeitspanne mit einer Drehzahl von 60 bis 10000 U/min zurückgezogen wird. Die Aktivierung des Getriebes und die Eröffnung des zweiten Kraftübertragungsweges erfolgt dabei automatisch, indem eine durch die Auslegung des Getriebes vorbestimmte von dem Sicherheitsgurt ausgeübte Zugkraft überschritten wird. Diese vorbestimmte Zugkraft wird überschritten z.B. indem der Elektromotor mit einer erheblich höheren Drehzahl von ca. 5000 bis 30 000 U/min betrieben wird, und die Gurtlose schlagartig herausgezogen wird, wodurch dann die Zugkraft in dem Sicherheitsgurt schlagartig ansteigt, und das Getriebe aktiviert wird. Dabei dreht das erste Teil des Gurtaufrollers vor der Aktivierung des Getriebes gleichsinnig zu der Drehrichtung der Welle des Elektromotors. Nach dem Ansteigen der Gegenkraft in dem Sicherheitsgurt dreht das erste Teil in einem ersten Schritt zunächst entgegen der Drehrichtung des Elektromotors, da ein weiteres Aufwickeln des Sicherheitsgurtes nicht mehr möglich ist, und die Antriebsdrehbewegung des Elektromotors über das in dieser Phase als Drehrichtungsumkehrgetriebe arbeitenden Getriebe auf das erste Teil in umgekehrter Drehrichtung übertragen wird. Diese umgekehrte Drehbewegung des ersten Teils wird dann durch die erfindungsgemäß vorgesehene Bremseinrichtung gebremst, wodurch wiederum die Blockiereinrichtung zur Blockierung des zweiten Teils des Getriebes angesteuert wird. Diese Blockierung des zweiten Teils des Getriebes führt dann zu einer Aktivierung des Getriebes, und der zweite Kraftübertragungsweg durch das Getriebe wird eröffnet.

Dadurch können zwei verschiedene Funktionen, nämlich eine Komfortfunktion zum Aufwickeln des Sicherheitsgurtes in die Parkposition und eine reversible Gurtstraffung in einer Vorunfallphase mit einem einzigen Elektromotor und einem einzigen Getriebe verwirklicht werden, ohne dass dadurch der benötigte Bauraum vergrößert wird. Damit kann ein sehr kompakter Multifunktionsgurtaufroller geschaffen werden, welcher aufgrund seiner kompakten Bauweise bevorzugt in einer Rückenlehne und besonders bevorzugt in einem oberen Randabschnitt einer Rückenlehne eines Kraftfahrzeuges angeordnet werden kann. Die ausschließlich durch die kurzzeitige Drehrichtungsumkehr herbeigeführte Blockierung des zweiten Teils ist für die erfindungsgemäße Lösung von besonderer Bedeutung, da dadurch verhindert werden kann, dass das zweite Teil auch während der normalen Antriebsdrehbewegung ohne die Drehrichtungsumkehr in dem ersten Kraftübertragungsweg blockiert, und damit das Getriebe unbeabsichtigt aktiviert wird. Die Drehrichtungsumkehr wird dadurch bewirkt, indem die zu überwindende Gurtkraft schlagartig ansteigt, was der Fall ist, wenn die Drehzahl des Elektromotors zum reversiblen Vorstraffen schlagartig erhöht wird, der Elektromotor weiterhin aber ein Drehmoment auf das Getriebe ausübt. Das Getriebe aktiviert sich in diesem Fall praktisch selbst, indem das Drehmoment des Elektromotors nicht mehr auf die Gurtwelle übertragen werden kann, sondern zu der Drehrichtungsumkehr des ersten Teils der Gurtwelle und der dadurch bewirkten Blockierung des zweiten Teils des Getriebes führt. Nach der Blockierung bildet die Blockiereinrichtung bzw. das blockierte zweite Teil des Getriebes in dem zweiten Kraftübertragungsweg die fahrzeugfeste Abstützung für das Getriebe.

Dabei kann das Getriebe bevorzugt ein die Drehbewegung des Elektromotors in eine langsamere Drehbewegung der Gurtwelle untersetzendes Untersetzungsgetriebe sein. Durch die Verwendung eines derartigen Getriebes kann der Elektromotor zur Verwirklichung einer höheren Rückzugskraft bevorzugt mit einer sehr viel höheren Drehzahl betrieben werden, welche dann in dem zweiten Kraftübertragungsweg untersetzt wird. Damit wird es ermöglicht, einen möglichst kleinbauenden Elektromotor mit einer sehr hohen Drehzahl zur Verwirklichung einer kompakten Bauform des Gurtaufrollers zu verwenden.

Weiter wird vorgeschlagen, dass die Blockiereinrichtung zusätzlich dazu eingerichtet ist, die Gurtwelle bei einem Überschreiten einer vorbestimmten Gurtbandauszugsbeschleunigung und/oder Fahrzeugverzögerung zu blockieren. Gurtaufroller müssen bereits aus gesetzlichen Anforderungen eine Blockiereinrichtung aufweisen, welche die Gurtwelle bei dem Überschreiten vorbestimmter Grenzwerte der Gurtbandauszugsbeschleunigung und der Fahrzeugverzögerung in Auszugsrichtungen blockieren muss. Durch die erfindungsgemäße Lösung kann die erfindungsgemäße Blockiereinrichtung, welche zum Schalten des Getriebes genutzt wird, gleichzeitig auch zu Erfüllung der gesetzlichen Anforderungen verwendet werden. Anders ausgedrückt, es kann die bereits vorhandene Blockiereinrichtung auch zum Schalten des Getriebes genutzt werden. Dabei ist es von besonderem Vorteil, dass die Ansteuerbewegung der Blockiereinrichtung erst durch eine Umkehr der Antriebsdrehbewegung des Elektromotors ausgelöst wird, da dadurch die Blockiereinrichtung besonders einfach zur Verwirklichung der gurtbandsensitiven Blockierung der Gurtwelle verwendet werden kann, welche ebenfalls durch eine Bewegung eines Teils des Gurtaufrollers (die Steuerscheibe) in Auszugsrichtung und ein Anhalten desselben bewirkt wird.

Weiter wird vorgeschlagen, dass das erste Teil durch eine die Bewegung der Blockierklinke erzwingende Steuerscheibe gebildet ist. Die Steuerscheibe weist eine Steuerkontur auf, an welcher die Blockierklinke anliegt, so dass die Bewegung der Blockierklinke durch die Bewegung der Steuerscheibe gesteuert wird. Damit kann die Bewegung der Blockiereinrichtung und der Blockiervorgang an sich nicht nur ausgelöst, sondern zusätzlich auch in dem Verlauf definiert und kontrolliert werden.

Dabei kann die Bremseinrichtung bevorzugt signalgesteuert sein, so dass der Bremsvorgang des ersten Teils bewusst durch ein externes Signal ausgelöst werden kann. Dabei kann die Bremseinrichtung zeitgleich zu der Ansteuerung des Elektromotors oder nach einem vorbestimmten Zeitintervall nach der Erhöhung der Drehzahl des Elektromotors aktiviert werden, so dass die durch die erhöhte Gurtkraft erzwungene drehrichtungsumgekehrte Bewegung des ersten Teils sofort wieder gebremst und die Ansteuerung der Blockiereinrichtung in einer möglichst kurzen Zeitspanne herbeigeführt werden kann. Insgesamt kann dadurch die erforderliche Zeitspanne zum Schalten des Getriebes verkürzt werden. Ferner kann selbstverständlich das Signal zur Ansteuerung des Elektromotors ebenfalls zur Ansteuerung der Bremseinrichtung genutzt werden, so dass beide Vorgänge zeitgleich ausgelöst werden.

Weiter wird in diesem Fall vorgeschlagen, dass die Steuerscheibe eine Verzahnung aufweist, und die Bremseinrichtung durch einen durch ein Signal zu einer Eingriffsbewegung in die Verzahnung der Steuerscheibe ansteuerbaren Blockierhebel gebildet ist. Das Anhalten bzw. Bremsen der Steuerscheibe erfolgt in diesem Fall durch das Auslenken des sich fahrzeugfest abstützenden Blockierhebels in die Verzahnung der Steuerscheibe, so dass die Steuerscheibe die Drehbewegung nachfolgend nicht mehr ausführen kann, und die Blockierklinke zu der Ausführung der Blockierbewegung gezwungen wird.

Weiter wird vorgeschlagen, dass das Getriebe ein Planetengetriebe ist. Planetengetriebe zeichnen sich durch eine kompakte Bauweise mit günstigen Kräfteverhältnissen aus und ermöglichen eine hohe Untersetzung, ohne dass dadurch die Außenabmaße des Getriebes vergrößert werden. Zur Auslegung des Planetengetriebes müssen lediglich die Durchmesserverhältnisse der Planetenräder, des Sonnenrades und der Verzahnung, an dem sich die Planetenräder abwälzen, entsprechend gewählt werden.

Dabei kann das Planetengetriebe bevorzugt so ausgebildet sein, dass es ein drehfest mit der Gurtwelle verbundenes Ringgehäuse mit einer Verzahnung aufweist, und das zweite Teil des Getriebes kann durch einen Planetenträger gebildet sein, an dem zwei oder mehr Planetenräder mit einer Verzahnung drehbar gelagert sind, welche mit ihren Verzahnungen in der Verzahnung des Ringgehäuses kämmen, und es kann ein von dem Elektromotor angetriebenes verzahntes Sonnenrad vorgesehen sein, welches in die Verzahnungen der Planetenräder eingreift, wobei das Sonnenrad die Gurtwelle bei einer Aktivierung des Getriebes in dem zweiten Kraftübertragungsweg über die Planetenräder und das Ringgehäuse durch die Blockierung des Planetenträgers zu einer Drehbewegung antreibt. Durch die vorgeschlagene Bauweise kann ein besonders kompaktes Planetengetriebe und damit auch ein kompakter Gurtaufroller bei einer gleichzeitig hohen Untersetzung der Antriebsdrehbewegung des Elektromotors verwirklicht werden. Ferner kann durch die Blockierung des Planetenträgers die Antriebsdrehbewegung des Elektromotors auf besonders einfache Weise umgekehrt werden.

Dabei kann das Ringgehäuse bevorzugt durch ein innenverzahntes Hohlrad gebildet sein, und der Planetenträger mit den Planetenrädern und das die Planetenräder antreibende Sonnenrad können bevorzugt in dem Hohlrad angeordnet sein. Das Hohlrad bildet damit nicht nur die Verzahnung, an der sich die Planetenräder abwälzen, sondern zusätzlich noch ein die Planetenräder, den Planetenträger und das Sonnenrad aufnehmendes Gehäuse zum Schutz dieser Teile zur Außenseite hin.

Eine besonders kompakte Bauweise mit einem möglichst kleinen Querschnitt und einer länglichen Bauform kann dadurch verwirklicht werden, indem die Gurtwelle, das Getriebe und der Elektromotor koaxial und in Reihe zueinander angeordnet sind.

Die Erfindung wird im Folgenden anhand bevorzugter Ausführungsformen unter Bezugnahme auf die beigefügten Figuren erläutert. Dabei zeigt
- Fig. 1: einen erfindungsgemäßen Gurtaufroller mit einem geöffneten Gehäuse, und
- Fig. 2: einen erfindungsgemäßen Gurtaufroller in Explosionsdarstellung mit Gehäuse in einer ersten Perspektive, und
- Fig. 3: einen erfindungsgemäßen Gurtaufroller in Explosionsdarstellung ohne Gehäuse in einer zweiten Perspektive, und
- Fig. 4: einen erfindungsgemäßen Gurtaufroller in Schnittdarstellung.

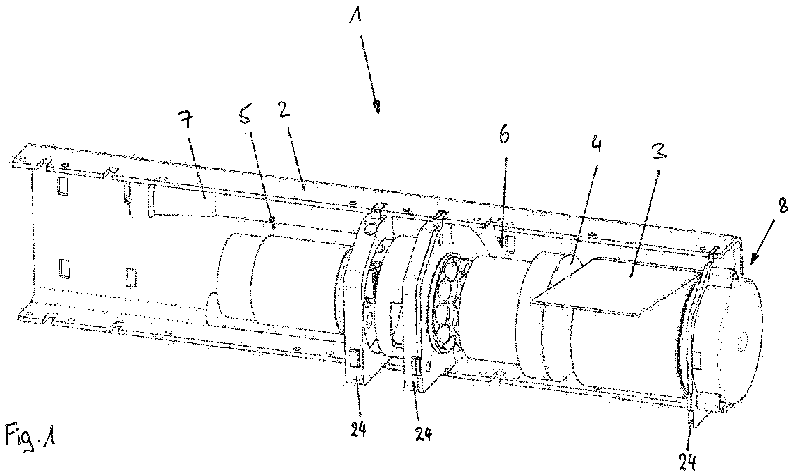

In der Figur 1 ist ein erfindungsgemäßer Gurtaufroller 1 mit einem Gehäuse 2 zu erkennen. Das Gehäuse 2 ist zweiteilig ausgebildet und zu einer besseren Erkennbarkeit der darin angeordneten Teile geöffnet, ohne ein zweites Teil dargestellt. Der Gurtaufroller 1 weist eine Gurtwelle 4, ein Getriebe 6 und einen Elektromotor 5 auf, welche koaxial und in Reihe zueinander angeordnet sind und damit eine schlanke längliche Baueinheit in dem Gehäuse 2 bilden. Die Bauteile des Gurtaufrollers 1 sind durch mehrere sich an dem Gehäuse 2 abstützende Stege 24 gelagert, welche zusätzlich Aufnahmen für weitere Einrichtungen wie z.B. Sensoren, Bauteile eines irreversiblen Gurtstraffers, elektrische Leitungen etc. aufweisen können. Ferner ist an der Außenseite des stirnseitigen Steges 24 eine Triebfederbaugruppe 8 gehalten, welche eine über ein Federherz mit der Gurtwelle 4 verbundene Triebfeder umfasst, die die Gurtwelle 4 in Einzugsrichtung des Sicherheitsgurtes 3 federbelastet. Ferner ist eine irreversible Straffvorrichtung 7 vorgesehen, welche die Gurtwelle 4 bei einer Aktivierung über ein Antriebsrad und das Getriebe 6 schlagartig mit einer hohen Straffleistung in Aufwickelrichtung antreibt, wenn ein unmittelbar bevorstehender Unfall nicht mehr zu vermeiden ist.

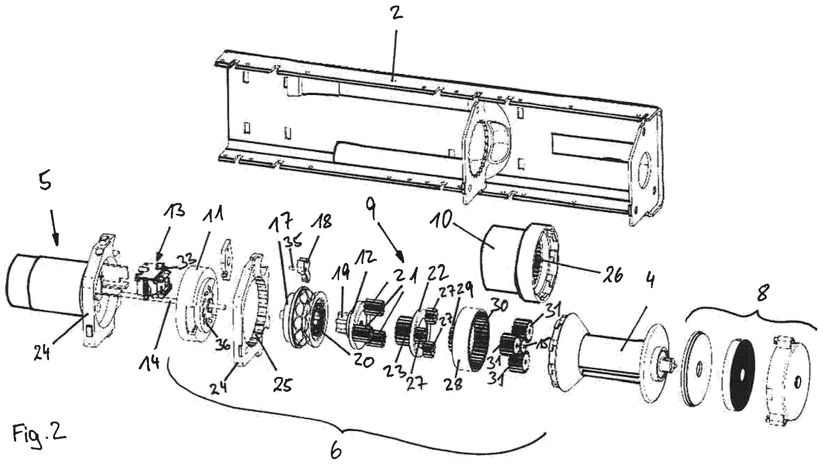

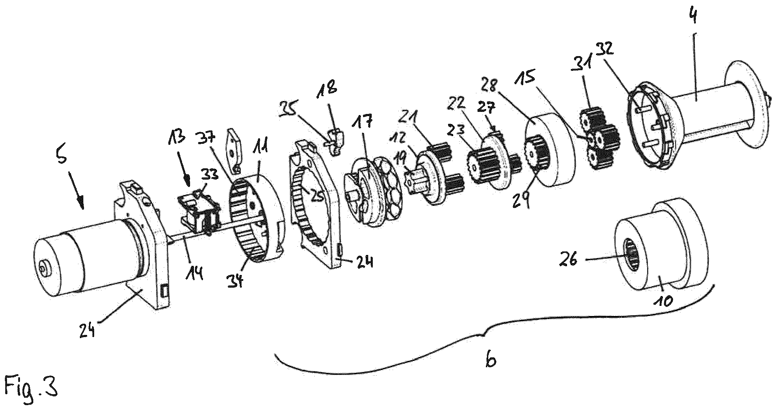

In den Figuren 2 und 3 ist derselbe Gurtaufroller 1 mit und ohne dem Gehäuse 2 in Explosionsdarstellung in zwei verschiedenen Ansichten dargestellt. Das Getriebe 6 umfasst ein als topfförmiges erstes Hohlrad ausgebildetes Ringgehäuse 10 mit einer inneren Verzahnung 26, welches mit der Gurtwelle 4 über eine Bajonettverbindung in Aufwickelrichtung des Sicherheitsgurtes 3 drehfest verbunden ist. Das Ringgehäuse 10 kann damit auch als ein ringförmiger, innenverzahnter Fortsatz der Gurtwelle 4 angesehen werden. An der Gurtwelle 4 sind ferner drei axial vorstehende Zapfen 32 vorgesehen, auf denen drei erste außenverzahnte Planetenräder 31 drehbar gelagert sind. Die ersten Planetenräder 31 greifen mit ihren Verzahnungen radial innen in eine Verzahnung eines zentrischen ersten Sonnenrades 15 ein, welches drehfest mit einer Welle 14 des Elektromotors 5 verbunden ist. Ferner greifen die ersten Planetenräder 31 radial außen in eine Innenverzahnung 30 eines zweiten Hohlrades 28 ein, an dem ein weiteres axial vorstehendes zweites Sonnenrad 29 vorgesehen ist. Die Gurtwelle 4 bildet damit einen ersten Planetenträger zur Halterung der ersten Planetenräder 31. Das zweite Sonnenrad 29 befindet sich in einem Verzahnungseingriff mit drei weiteren zweiten Planetenrädern 27 eines zweiten weiteren Planetenträgers 22, welcher ebenfalls ein weiteres drittes Sonnenrad 23 aufweist. Das dritte Sonnenrad 23 befindet sich in einem Verzahnungseingriff mit einem Satz von drei weiteren dritten Planetenrädern 21 eines dritten Planetenträgers 12, der über einen außenverzahnten Fortsatz 19 drehfest mit einem Profilkopf 17 verbunden ist. Der Profilkopf 17 ist außerdem radial außen mit einer Eingriffskontur zur Übertragung der Antriebsbewegung der Antriebseinrichtung der irreversiblen Straffeinrichtung versehen und bildet damit auch das Strafferantriebsrad der irreversiblen Straffeinrichtung 7. Der Profilkopf 17 bildet zusammen mit dem dritten Planetenträger 12 einen drehfesten Verbund. Ferner ist der Profilkopf 17 Träger einer Blockiereinrichtung 18 in Form einer schwenkbar gelagerten Blockierklinke mit einem vorstehenden Stift 35, welche derart angeordnet und ausgerichtet ist, dass sie bei einem Ausschwenken von dem Profilkopf 17 weg in eine gehäusefeste Verzahnung 25 einer der Stege 24 einsteuert. Die Verzahnung der Blockierklinke und die gehäusefeste Verzahnung 25 in dem Steg 24 sind dabei so ausgerichtet, dass die Blockierklinke den Profilkopf 17 und damit auch den dritten Planetenträger 12 bei einem Eingriff in die Verzahnung 25 in Auszugsrichtung des Sicherheitsgurtes 3 blockiert.

Auf der Welle 14 des Elektromotors 5 ist ferner eine Steuerscheibe 11 mit mehreren Ausnehmungen 36 in Form jeweils einer Steuerkontur vorgesehen. Die Blockierklinke greift mit dem Stift 35 in eine der Ausnehmungen 36 ein und koppelt dadurch die Blockierklinke mit der Steuerscheibe 11.

Ferner ist an dem Stift 35 der Blockierklinke ein Ende einer nicht dargestellten Feder gehalten, welche mit dem anderen Ende an dem Profilkopf 17 gehalten ist. Die nicht dargestellte Feder spannt die Blockierklinke in Richtung einer Stellung vor, in welcher sie nicht in die Verzahnung 25 eingreift, so dass der Profilkopf 17 und der damit drehfest verbundene dritte Planetenträger 12 bei entspannter Feder frei gegenüber dem Steg 24 bzw. der Verzahnung 25 und dem Gehäuse 2 sowohl in Auszugsrichtung als auch in Einzugsrichtung des Sicherheitsgurtes 3 drehen können. Die Feder ist ferner so ausgelegt, dass sie die Steuerscheibe 11 aufgrund des in eine der Ausnehmungen 36 eingreifenden Stiftes 35 in Richtung der Auszugsrichtung des Sicherheitsgurtes 3 federbelastet.

Die Steuerscheibe 11 ist als ein drittes Hohlrad mit einer Innenverzahnung 34 ausgebildet und weist einen Hohlraum 37 auf, in dem eine Bremseinrichtung 13 angeordnet ist. Die Bremseinrichtung 13 ist in Form eines signalgesteuerten Aktuators mit einem Elektromagneten und einem Blockierhebel 33 ausgebildet, welcher so angeordnet und ausgerichtet ist, dass der Blockierhebel 33 bei einem Bestromen des Elektromagneten zu einem Ausschwenken gezwungen wird, wodurch er in die Verzahnung 34 der Steuerscheibe 11 einsteuert und diese daraufhin gegenüber dem Profilkopf 17 und der Blockierklinke bremst bzw. anhält. Durch diese Relativbewegung der Steuerscheibe 11 gegenüber dem Profilkopf 17 und der Blockierklinke wird die Blockierklinke dann zu einer Einsteuerbewegung in die Verzahnung 25 des Steges 24 gezwungen, wodurch der Profilkopf 17 und der damit drehfest verbundene dritte Planetenträger 12 in Auszugsrichtung des Sicherheitsgurtes 3 blockiert wird. Die Aussteuerbewegung der Blockierklinke wird dabei durch die Form der Steuerkontur in der Steuerscheibe 11 definiert, in welche die Blockierklinke mit dem Stift 35 eingreift.

Das Getriebe 6 ist damit als ein dreistufiges Planetengetriebe ausgebildet, welches ausgehend von der Welle 14 des Elektromotors 5 über das erste Sonnenrad 15 angetrieben wird. Das Ringgehäuse 10 ist hier bevorzugt als ein Hohlrad mit einer Innenverzahnung 26 ausgebildet und dient damit zusätzlich als ein das Planetengetriebe nach außen hin schützendes Gehäuse, in dessen Innenverzahnung 26 sich die zweiten und dritten Planetenräder 27 und 21 abwälzen. Ferner dient das Ringgehäuse 10 auch zur Aufnahme des zweiten Hohlrades 28, in dessen Verzahnung 30 sich die ersten Planetenräder 31 abwälzen. Das Ringgehäuse 10 ist über eine Bajonettverbindung mit der Gurtwelle 4 in Aufwickelrichtung des Sicherheitsgurtes 3 drehfest verbunden. Das gesamte Getriebe 6 kann sowohl aus einem leichten, formstabilen Kunststoff als auch aus Metall oder einem anderen formstabilen Werkstoff bzw. Verbundstoff hergestellt sein.

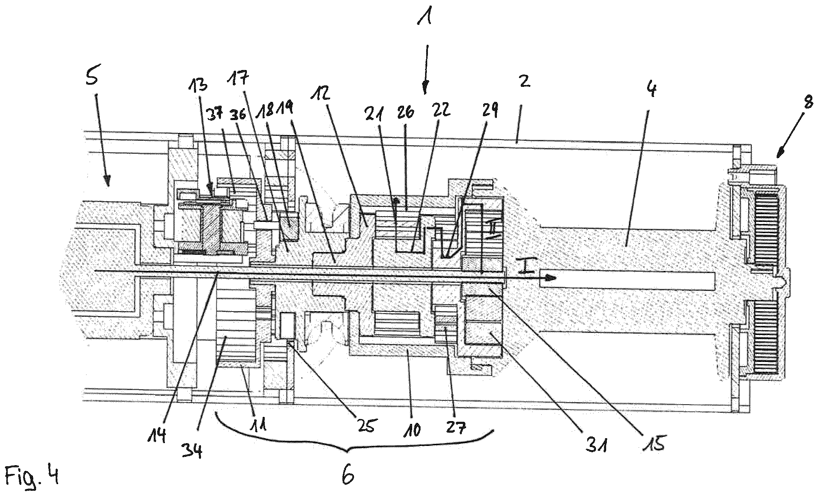

In der Figur 4 ist der Gurtaufroller 1 in Schnittdarstellung zu erkennen. Wenn der Sicherheitsgurt 3 nach dem Abschnallen in eine Parkposition aufgerollt werden soll, wird der Elektromotor 5 mit einer niedrigen Leistung bei einer Drehzahl von 100 bis 200 U/min und einer Rückzugskraft des Sicherheitsgurtes 3 von wenigen Newton betrieben. Die Blockiereinrichtung 18 in Form der Blockierklinke ist deaktiviert, d.h. die Blockierklinke greift nicht in die Verzahnung 25 ein, und sowohl der Profilkopf 17 als auch der dritte Planetenträger 12 einschließlich des gesamten Getriebes 6 können frei gegenüber dem Gehäuse 2 drehen. Das Getriebe 6 ist so ausgelegt, dass es eine geringe Selbsthemmung aufweist, welche so bemessen ist, dass die Antriebsdrehbewegung der Welle 14 über das erste Sonnenrad 15 auf die Gurtwelle 4 übertragen wird, ohne dass das Getriebe 6 dabei aktiviert wird. Bei dem deaktivierten Getriebe 6 findet in den Planetenstufen des Planetengetriebes 9 keine Relativbewegung zwischen den ineinandergreifenden Zahnrädern statt. Die Drehbewegung der Welle 14 wird 1:1 auf die Gurtwelle 4 übertragen. Dabei wird dies insbesondere deshalb ermöglicht, da die von dem Sicherheitsgurt 3 beim Aufwickeln in die Parkposition ausgeübte Gegenkraft sehr klein bzw. vernachlässigbar ist. Dabei wird der Aufwickelvorgang zusätzlich durch die Triebfeder in der Triebfederbaugruppe 8 unterstützt, und die insgesamt aufzubringende Aufwickelkraft zum Rückzug des Sicherheitsgurtes 3 in die Parkposition wird in diesem Fall durch die Summe der vom Elektromotor 5 aufgebrachten Zugkraft und der Zugkraft der Triebfeder gebildet. Im Umkehrschluss kann durch das Aufwickeln über den Elektromotor 5 eine sehr viel schwächere Triebfeder verwendet werden, ohne dass dadurch die Funktionssicherheit des Aufwickelvorganges in die Parkposition riskiert wird. Durch die schwächere Triebfeder kann der Tragekomfort des Sicherheitsgurtes 3 im angelegten Zustand wesentlich verbessert werden, da der Insasse den Sicherheitsgurt 3 einfach weniger spürt bzw. wahrnimmt.

Wenn der Elektromotor 5 für eine reversible Gurtvorstraffung in einer Vorphase eines möglichen Unfalles gestrafft werden soll, muss der Sicherheitsgurt 3 hingegen mit einer deutlich höheren Straffkraft von ca. 150 bis 800 N bei einer Drehzahl von 60 bis 10000 U/min zurückgezogen werden. Dies wird dadurch erreicht, indem die Leistung des Elektromotors 5 durch eine höhere Bestromung deutlich erhöht wird, so dass der Elektromotor 5 die Welle 14 in einer sehr kurzen Hochlaufphase in einer Drehzahl von ca. 5000 bis 30000 U/min antreibt. Diese hohe Drehzahl der Welle 14 wird dann über denselben Kraftübertragungsweg über das Getriebe 6 auf die Gurtwelle 4 übertragen, was wiederum zu einem sehr schnellen Herausziehen der vorhandenen Gurtlose mit einer vergleichsweise kleinen Zugkraft führt. Da der Sicherheitsgurt 3 in dieser Situation an dem Insassen anliegt, führt das Herausziehen der Gurtlose unmittelbar zu einem sehr starken Anstieg der von dem Sicherheitsgurt 3 ausgeübten Gegenkraft, wenn die geringe Zugkraft nicht mehr ausreicht, um weitere Gurtlose aus dem Sicherheitsgurt 3 herauszuziehen. Damit wird die Antriebsbewegung der Gurtwelle 4 durch die Gegenkraft des Sicherheitsgurtes 3 selbst gehemmt bzw. blockiert, und das drehfest mit der Gurtwelle 4 verbundene Ringgehäuse 10 kann die Drehbewegung nicht mehr ausführen. Gleichzeitig wirkt aber das von der Welle 14 über das erste Sonnenrad 15 ausgeübte Antriebsdrehmoment weiter. Aufgrund des blockierten Ringgehäuses 10 ist eine weitere Drehbewegung der Welle 14 nur möglich, indem die Antriebsdrehbewegung des ersten Sonnenrades 15 über das Getriebe 6 rückwärts zu einer gegensinnigen Drehbewegung auf den dritten Planetenträger 12, den Profilkopf 17 und die Steuerscheibe 11 übertragen wird. Das Getriebe 6 arbeitet in dieser Phase als Drehrichtungsumkehrgetriebe.

Da die ersten Planetenräder 31 auf den Zapfen 32 der Gurtwelle 4 zwar drehen können aber keine Umlaufbewegung gegenüber der Gurtwelle 4 ausführen können, wird die Drehbewegung des ersten Sonnenrades 15 bereits in der ersten Stufe des 3-stufigen Planetengetriebes in eine umgekehrte Drehrichtung des zweiten Hohlrades 28 umgekehrt. Damit dreht das zweite Hohlrad 28 in dieser Phase bei einer Drehrichtung des Elektromotors 5 in Einzugsrichtung des Sicherheitsgurtes 3 stattdessen in Auszugsrichtung des Sicherheitsgurtes 3. Diese umgekehrte Drehbewegung des zweiten Hohlrades 28 wird über die weiteren sich an der Verzahnung 26 des blockierten Ringgehäuses 10 abwälzenden zweiten und dritten Planetenräder 27 und 21 und den zweiten und dritten Planetenträger 22 und 12 schließlich über den Profilkopf 17 auch auf die Steuerscheibe 11 übertragen.

Zeitgleich oder bereits kurz vor der Drehrichtungsumkehr wird die Bremseinrichtung 13 aktiviert, so dass der Blockierhebel 33 ausgeschwenkt wird und zum Eingriff in die Verzahnung 34 der Steuerscheibe 11 gelangt. Dadurch wird die beginnende Drehbewegung der Steuerscheibe 11 in Auszugsrichtung gestoppt bzw. gebremst und die Steuerscheibe 11 wird unter Spannung der nicht dargestellten Feder gegenüber dem sich weiterdrehenden Profilkopf 17 und der Blockierklinke angehalten. Diese Relativbewegung führt dazu, dass die Blockierklinke aufgrund des in die Ausnehmung 36 eingreifenden Stiftes 35 dazu gezwungen wird, eine Aussteuerbewegung auszuführen, durch welche die Blockierklinke mit ihrer Verzahnung zum Eingriff in die Verzahnung 25 des Steges 24 gelangt und eine weitere Drehbewegung des Profilkopfes 17 und des damit drehfest verbundenen dritten Planetenträgers 12 in Auszugsrichtung des Sicherheitsgurtes 3 blockiert. Nachfolgend stützt sich der dritte Planetenträger 12 über die Blockiereinrichtung an dem Gehäuse 2 des Gurtaufrollers 1 fahrzeugfest ab. Damit können die dritten Planetenräder 21 auf dem dritten Planetenträger 12 zwar noch eine Drehbewegung um ihre Drehachsen ausführen, eine Umlaufbewegung der Planetenräder 21 ist aber nicht mehr möglich. Dies führt zu einer weiteren Drehrichtungsumkehr, so dass das Ringgehäuse 10 und die damit drehfest verbundene Gurtwelle 4 über die weiterdrehenden dritten Planetenräder 21 zu einer Drehbewegung in Einzugsrichtung des Sicherheitsgurtes 3 angetrieben werden. Damit ist das Getriebe 6 aktiviert und die Drehbewegung der Welle 14 des Elektromotors 5 von ca. 5000 bis 30000 U/min wird in einem Übersetzungsverhältnis von i= 30 bis 80 auf eine Drehzahl von 60 bis 10000 U/min untersetzt. Aufgrund der Untersetzung der Drehbewegung wird dabei gleichzeitig das Drehmoment und die auf den Sicherheitsgurt 3 wirkende Rückzugskraft auf 150 bis 800 N erhöht.

Die Blockiereinrichtung 18 ist hier eine Blockierklinke, welche zusätzlich auch zu einer Blockierung der Gurtwelle 4 in Auszugsrichtung genutzt werden kann, wenn von einer geeigneten Sensoreinrichtung ein Überschreiten einer vorbestimmten Gurtbandauszugsbeschleunigung oder Fahrzeugverzögerung ermittelt wird.

Die Bremseinrichtung 13 weist in dem vorliegenden Ausführungsbeispiel einen Blockierhebel 33 auf, der in die Verzahnung 34 der Steuerscheibe 11 einsteuert und diese daraufhin gegenüber dem Profilkopf 17 anhält. Diese Ausführungsform ist insofern von Vorteil, da die Drehbewegung der Steuerscheibe 11 sehr schnell angehalten also bis auf Null gebremst werden kann. Es ist aber auch denkbar andere Bremseinrichtungen 13 vorzusehen, welche nur in der Lage sein müssen, die einsetzten Drehbewegung der Steuerscheibe 11 in Auszugsrichtung des Sicherheitsgurtes 3 anzuhalten bzw. zu bremsen und dadurch eine Relativbewegung der Steuerscheibe 11 zu dem Profilkopf 17 erzwingen. Solche Bremseinrichtungen 13 können z.B. auch durch Reibungsbremsen oder ähnliche Einrichtungen gebildet sein.

Der Vorteil der erfindungsgemäßen Lösung ist darin zu sehen, dass der Gurtaufroller 1 mit dem Elektromotor 5 die Verwirklichung zweier Funktionen nämlich einer Komfortfunktion zum Aufwickeln des Sicherheitsgurtes 3 in die Parkposition und eine reversible Gurtstraffung mit zwei sich erheblich voneinander unterscheiden Rückzugskräften auf einem niedrigeren und einem höheren Kraftniveau ermöglicht, ohne dass dadurch erforderliche Bauraum vergrößert wird. Dabei wird ein Getriebe 6 verwendet, welches nicht nur eine Untersetzung der Antriebsdrehzahl des Elektromotors 5 ermöglicht. Das Getriebe 6 wird zusätzlich selbst zur Schaltung von der Komfortfunktion zu der Funktion der reversiblen Gurtstraffung genutzt, indem durch die bewusst herbeigeführte Drehrichtungsumkehr die Blockierung und damit die Schaltung der Blockiereinrichtung 18 herbeigeführt bzw. ausgelöst wird. Diese Schaltung der Blockiereinrichtung 18 bewirkt dann, dass anschließend durch eine nochmalige Drehrichtungsumkehr die Gurtwelle 4 wieder in die gewünschte Aufwickelrichtung angetrieben wird. Das Getriebe 6 schaltet sich praktisch selbst, wenn die Bremseinrichtung 13 aktiviert ist. Dabei wird die Selbsthemmung des Getriebes 6 bewusst dazu ausgenutzt, dass das gesamte Getriebe 6 während der Komfortfunktion und dem Zurückziehen des Sicherheitsgurtes 3 mit der sehr geringen Kraft von wenigen Newton als Block angetrieben wird. Die Schaltung des Getriebes 6 wird dann erst bei einem Überschreiten einer durch die Selbsthemmung des Getriebes 6 vorbestimmten Gegenkraft eingeleitet und ausgelöst, indem das von dem Elektromotor 5 aufgebrachte Drehmoment nicht mehr ausreicht, um die Gurtwelle 4 in Aufwickelrichtung anzutreiben, sondern stattdessen die Drehbewegung in umgekehrter Richtung in das Getriebe 6 zurück übertragen wird, wie dies oben beschrieben wurde.

Als Blockiereinrichtung 18 kann dabei eine bereits vorhandene Blockierklinke verwendet werden, so dass die aus der Verwirklichung der Zusatzfunktion entstehenden Mehrkosten reduziert werden können. Ferner kann als Bremseinrichtung 13 auch ein ansteuerbarer Aktuator verwendet werden, welcher die Blockiereinrichtung 18 zusätzlich bei einem Überschreiten einer vorbestimmten Gurtbandauszugsbeschleunigung oder Fahrzeugverzögerung ansteuert.

Die Steuerscheibe 11 bildet hier das erste Teil, welches beim Ansteigen der von dem Sicherheitsgurt 3 ausgeübten Zugkraft nach dem oben beschriebenen Ablauf zu einer Drehbewegung in einer zu der Antriebsdrehbewegung des Elektromotors 5 entgegengesetzten Drehrichtung angetrieben wird. Dabei wird die Steuerscheibe 11 durch die Federbelastung vor dem Anstieg der Zugkraft des Sicherheitsgurtes noch in Richtung der Antriebsdrehrichtung des Elektromotors 5 mitgenommen. Erst diese Drehrichtungsumkehr ermöglicht dann durch die Aktivierung der Bremseinrichtung 13 und das dadurch bewirkte Bremsen bzw. Anhalten der Steuerscheibe 11 die Auslösung der Blockierbewegung der Blockiereinrichtung 18. Damit ist zunächst einmal sichergestellt, dass die Blockiereinrichtung 18 während der Drehung der Steuerscheibe 11 in Aufwickelrichtung des Sicherheitsgurtes 3 zum Aufrollen in die Parkposition nicht unbeabsichtigt aktiviert wird. Das durch die Blockiereinrichtung 18 in Abwickelrichtung blockierte zweite Teil ist dann der dritte Planetenträger 12, der dann in der blockierten Stellung das Ringgehäuse 10 und die Gurtwelle durch die Drehung seiner dritten Planetenräder 21 in Aufwickelrichtung antreibt. Damit liegt dem Funktionswechsel von der Funktion des Elektromotors 5 als Wickelhilfe nach dem Abschnallen zu der Funktion als reversibler Gurtstraffer eine zweifache Drehrichtungsumkehr zugrunde, nämlich zuerst eine erste Drehrichtungsumkehr der Steuerscheibe 11 bzw. des zweiten Hohlrades 28 von der

Aufwickelrichtung des Sicherheitsgurtes 3 in die Auszugsrichtung des Sicherheitsgurtes 3. Durch diese erste Drehrichtungsumkehr wird das Blockieren des zweiten Teils in diesem Fall des dritten Planetenträgers 12 bewirkt. Anschließend erfolgt eine zweite Drehrichtungsumkehr an dem blockierten dritten Planetenträger 12 wieder in die Einzugsrichtung des Sicherheitsgurtes 3. Damit wird die Antriebsdrehbewegung des Elektromotors 5 in dem Getriebe 6 in ihrer Drehrichtung zweifach umgekehrt und durch die Planetenstufen zusätzlich in eine erheblich geringere Drehzahl der Gurtwelle 4 aber mit einer erhöhten Rückzugskraft untersetzt.

## Patentansprüche

1. Gurtaufroller (1) mit
- einer in einem fahrzeugfest befestigbaren Gehäuse (2) drehbar gelagerten Gurtwelle (4), auf welcher ein Sicherheitsgurt (3) aufwickelbar ist, und
- einem Elektromotor (5) zum Antrieb der Gurtwelle (4) zu einer Drehbewegung, und
- einem die Drehbewegung von dem Elektromotor (5) auf die Gurtwelle (4) übertragenden Getriebe (6),
- das Getriebe (6) in einem deaktivierten Zustand als Baugruppe zum Antrieb der Gurtwelle (4) mit einem ersten Drehmoment antreibbar ist, und
- der Gurtaufroller (1) ein erstes Teil aufweist, welches bei einem Überschreiten einer von dem Sicherheitsgurt (3) ausgeübten Zugkraft zu einer Drehbewegung in einer in Bezug zu der Drehrichtung des Elektromotors (5) entgegengesetzten Drehrichtung angetrieben wird, und **dadurch gekennzeichnet,**
- **dass** eine Bremseinrichtung (13) vorgesehen ist, welche die Drehbewegung des ersten Teils bremst und dadurch eine Blockiereinrichtung (18) zur Blockierung eines zweiten Teils des Getriebes (6) ansteuert, wobei
- die Blockiereinrichtung (18) das Getriebe (6) durch die Blockierung des zweiten Teils zur Übertragung der Drehbewegung des Elektromotors (5) in einem Untersetzungsverhältnis auf die Gurtwelle (4) aktiviert.

2. Gurtaufroller (1) nach Anspruch 1, **dadurch gekennzeichnet, dass**
- das Getriebe (6) ein die Drehbewegung des Elektromotors (5) in eine langsamere Drehbewegung der Gurtwelle (4) untersetzendes Untersetzungsgetriebe ist.

3. Gurtaufroller (1) nach einem der beiden Ansprüche 1 oder 2, **dadurch gekennzeichnet, dass**
- die Blockiereinrichtung (18) dazu eingerichtet ist, die Gurtwelle (4) bei einem Überschreiten einer vorbestimmten Gurtbandauszugsbeschleunigung und/oder Fahrzeugverzögerung zu blockieren.

4. Gurtaufroller (1) nach Anspruch 3, **dadurch gekennzeichnet, dass**
- das erste Teil durch eine die Bewegung der Blockiereinrichtung (18) erzwingende Steuerscheibe (11) gebildet ist.

5. Gurtaufroller (1) nach einem der Ansprüche 1 bis 4, **dadurch gekennzeichnet, dass**
- die Bremseinrichtung (13) signalgesteuert ist.

6. Gurtaufroller (1) nach Anspruch 4 und nach Anspruch 5, **dadurch gekennzeichnet, dass**
- die Steuerscheibe eine Verzahnung (34) aufweist, und die Bremseinrichtung (13) einen durch ein Signal zu einer Eingriffsbewegung in die Verzahnung (34) der Steuerscheibe ansteuerbaren Blockierhebel (33) aufweist.

7. Gurtaufroller (1) nach einem der Ansprüche 1 bis 6, **dadurch gekennzeichnet, dass**
- das Getriebe (6) ein Planetengetriebe ist.

8. Gurtaufroller (1) nach Anspruch 7, **dadurch gekennzeichnet, dass**
- das Planetengetriebe ein drehfest mit der Gurtwelle (4) verbundenes Ringgehäuse (10) mit einer Verzahnung (26) aufweist, und das zweite Teil des Getriebes (6) durch einen Planetenträger (12) gebildet ist, an dem zwei oder mehr Planetenräder (21) mit einer Verzahnung drehbar gelagert sind, welche mit ihren Verzahnungen in der Verzahnung (26) des Ringgehäuses (10) kämmen, und
- dass ein von dem Elektromotor (5) angetriebenes verzahntes Sonnenrad (23) vorgesehen ist, welches in die Verzahnungen der Planetenräder (21) eingreift, wobei
- das Sonnenrad (23) die Gurtwelle (4) bei einer Aktivierung des Getriebes (6) in dem zweiten Kraftübertragungsweg (II) über die Planetenräder (21), das Ringgehäuse (10) unter Abstützung an dem durch die Blockiereinrichtung (18) blockierten Planetenträger zu einer Drehbewegung antreibt.

9. Gurtaufroller (1) nach Anspruch 8, **dadurch gekennzeichnet, dass**
- das Ringgehäuse (10) durch ein innenverzahntes Hohlrad gebildet ist, und
- der Planetenträger (12) mit den Planetenrädern (21) und das die Planetenräder (21) antreibende Sonnenrad (23) in dem Hohlrad angeordnet sind.

10. Gurtaufroller (1) nach einem der Ansprüche 1 bis 9, **dadurch gekennzeichnet, dass**
- die Gurtwelle (4), das Getriebe (6) und der Elektromotor (5) koaxial und in Reihe zueinander angeordnet sind.

## Claims

1. A belt retractor (1) having
- a belt shaft (4) which is rotatably mounted in a housing (2) and onto which a safety belt (3) can be wound, the housing being able to be fastened to the vehicle, and
- an electric motor (5) for driving the belt shaft (4) to move rotationally, and
- a gear mechanism (6) which transmits the rotational movement from the electric motor (5) to the belt shaft (4),
- the gear mechanism (6) can be driven in a deactivated state as an assembly to drive the belt shaft (4) with a first torque, and
- the belt retractor (1) has a first part which, when a tensile force exerted by the safety belt (3) is exceeded, is driven to move rotationally in a direction of rotation opposite to the direction of rotation of the electric motor (5), and
**characterized in that**
- a braking device (13) is provided which brakes the rotational movement of the first part and thereby actuates a blocking device (18) to block a second part of the gear mechanism (6),
- the blocking device (18) activating the gear mechanism (6) by blocking the second part in order to transmit the rotational movement of the electric motor (5) to the belt shaft (4) in a reduction ratio.

2. The belt retractor (1) according to Claim 1, **characterized in that**
- the gear mechanism (6) is a reduction gear mechanism which reduces the rotational movement of the electric motor (5) into a slower rotational movement of the belt shaft (4).

3. The belt retractor (1) according to either of Claims 1 or 2,
**characterized in that**
- the blocking device (18) is configured to block the belt shaft (4) when a predetermined belt pull-out acceleration and/or vehicle deceleration is exceeded.

4. The belt retractor (1) according to Claim 3, **characterized in that**
- the first part is formed by a control disk (11) which forces the locking device (18) to move.

5. The belt retractor (1) according to one of claims 1 to 4,
**characterized in that**
- the braking device (13) is signal-controlled.

6. The belt retractor (1) according to claim 4 and according to claim 5,
**characterized in that**
- the control disk has teeth (34), and the braking device (13) has a blocking lever (33) that can be actuated by a signal to move to engage into the teeth (34) of the control disk.

7. The belt retractor (1) according to one of claims 1 to 6,
**characterized in that**
- the gear mechanism (6) is a planetary gear mechanism.

8. The belt retractor (1) according to Claim 7, **characterized in that**
- the planetary gear mechanism has an annular housing (10) which has teeth (26) and is connected to the belt shaft (4) for conjoint rotation, and the second part of the gear mechanism (6) is formed by a planetary carrier (12) on which two or more planetary gears (21) having teeth are rotatably mounted, the teeth of which carrier mesh with the teeth (26) of the annular housing (10), and
- **in that** a toothed sun gear (23) driven by the electric motor (5) is provided, which sun gear engages in the teeth of the planetary gears (21),
- the sun gear (23) driving the belt shaft (4), when the gear mechanism (6) is activated in the second force transmission path (II) via the planetary gears (21), the annular housing (10), while being supported on the planetary carrier blocked by the blocking device (18), to move rotationally.

9. The belt retractor (1) according to Claim 8, **characterized in that**
- the annular housing (10) is formed by an internally toothed ring gear, and
- the planetary carrier (12) having the planetary gears (21) and the sun gear (23) driving the planetary gears (21) are arranged in the ring gear.

10. The belt retractor (1) according to one of claims 1 to 9,
**characterized in that**
- the belt shaft (4), the gear mechanism (6) and the electric motor (5) are arranged coaxially to one another and in series relative to one another.

## Revendications

1. Enrouleur de ceinture (1) comportant
- un arbre de ceinture (4) monté de manière à pouvoir tourner dans un boîtier (2) pouvant être fixé de manière solidaire au véhicule, sur lequel arbre de ceinture une ceinture de sécurité (3) peut être enroulée, et
- un moteur électrique (5) destiné à entraîner l'arbre de ceinture (4) dans un mouvement de rotation, et
- un engrenage (6) transmettant le mouvement de rotation du moteur électrique (5) à l'arbre de ceinture (4),
- dans un état désactivé, l'engrenage (6) peut être entraîné avec un premier couple en tant que module pour l'entraînement de l'arbre de ceinture (4), et
- l'enrouleur de ceinture (1) présente une première partie qui, en cas de dépassement d'une force de traction exercée par la ceinture de sécurité (3), est entraînée dans un mouvement de rotation dans un sens de rotation opposé par rapport au sens de rotation du moteur électrique (5), et **caractérisé en ce**
- **qu'**un dispositif de freinage (13) est prévu, lequel freine le mouvement de rotation de la première partie et commande ainsi un dispositif de blocage (18) permettant de bloquer une seconde partie de l'engrenage (6), dans lequel
- le dispositif de blocage (18) active l'engrenage (6) par le blocage de la seconde partie pour la transmission du mouvement de rotation du moteur électrique (5) dans un rapport de démultiplication à l'arbre de ceinture (4).

2. Enrouleur de ceinture (1) selon la revendication 1, **caractérisé en ce que**
- l'engrenage (6) est un engrenage démultiplicateur démultipliant le mouvement de rotation du moteur électrique (5) en un mouvement de rotation plus lent de l'arbre de ceinture (4).

3. Enrouleur de ceinture (1) selon l'une des deux revendications 1 ou 2,
**caractérisé en ce que**
- le dispositif de blocage (18) est conçu pour bloquer l'arbre de ceinture (4) en cas de dépassement d'une accélération d'extraction de bande de ceinture et/ou d'une décélération de véhicule prédéterminées.

4. Enrouleur de ceinture (1) selon la revendication 3, **caractérisé en ce que**
- la première partie est formée par un disque de commande (11) forçant le mouvement du dispositif de blocage (18).

5. Enrouleur de ceinture (1) selon l'une des revendications 1 à 4,
**caractérisé en ce que**
- le dispositif de freinage (13) est commandé par signal.

6. Enrouleur de ceinture (1) selon la revendication 4 et selon la revendication 5,
**caractérisé en ce que**
- le disque de commande présente une denture (34), et le dispositif de freinage (13) présente un levier de blocage (33) pouvant être commandé par un signal pour effectuer un mouvement de mise en prise dans la denture (34) du disque de commande.

7. Enrouleur de ceinture (1) selon l'une des revendications 1 à 6,
**caractérisé en ce que**
- l'engrenage (6) est un engrenage planétaire.

8. Enrouleur de ceinture (1) selon la revendication 7, **caractérisé en ce que**
- l'engrenage planétaire présente un boîtier annulaire (10) relié de manière solidaire en rotation à l'arbre de ceinture (4) et comportant une denture (26), et la seconde partie de l'engrenage (6) est formée par un porte-satellites (12) sur lequel deux roues planétaires (21) ou plus, lesquelles comportent une denture, sont montées de manière à pouvoir tourner, lesquelles s'engrènent avec leurs dentures dans la denture (26) du boîtier annulaire (10), et
- **en ce qu'**une roue solaire (23) dentée entraînée par le moteur électrique (5) est prévue, laquelle vient en prise dans les dentures des roues planétaires (21), dans lequel
- lors d'une l'activation de l'engrenage (6), la roue solaire (23) entraîne l'arbre de ceinture (4) dans un mouvement de rotation dans la seconde voie de transmission de force (II) par l'intermédiaire des roues planétaires (21), du boîtier annulaire (10) en s'appuyant sur le porte-satellites bloqué par le dispositif de blocage (18).

9. Enrouleur de ceinture (1) selon la revendication 8, **caractérisé en ce que**
- le boîtier annulaire (10) est formé par une couronne à denture interne, et
- le porte-satellites (12) est disposé avec les roues planétaires (21) dans la couronne et la roue solaire (23) entraînant les roues planétaires (21) est disposée dans la couronne.

10. Enrouleur de ceinture (1) selon l'une des revendications 1 à 9,
**caractérisé en ce que**
- l'arbre de ceinture (4), l'engrenage (6) et le moteur électrique (5) sont disposés en série et de manière coaxiale les uns par rapport aux autres.
